# EUROPÄISCHE PATENTSCHRIFT

(11) **EP 3 405 307 B1**
(45) Veröffentlichungstag und Bekanntmachung des Hinweises auf die Patenterteilung: **19.01.2022**
(21) Anmeldenummer: 16784883.7
(22) Anmeldetag: 19.10.2016
(51) Int. Cl.: B23Q 17/00, B44B 5/00, G07C 11/00

(54) **PRÄGEPRESSE ZUM PRÄGEN VON KFZ-KENNZEICHEN-PLATINEN, SOWIE VERFAHREN ZUM BETREIBEN DER PRÄGEPRESSE**
STAMPING PRESS FOR STAMPING MOTOR VEHICLE NUMBER PLATES, AND METHOD FOR OPERATING THE STAMPING PRESS
PRESSE D'ESTAMPAGE POUR ESTAMPER DES PLAQUES D'IMMATRICULATION DE VÉHICULES AUTOMOBILES, ET PROCÉDÉ DE FONCTIONNEMENT DE LA PRESSE D'ESTAMPAGE

(30) Priorität: 20.01.2016 DE 102016100926
(43) Veröffentlichungstag der Anmeldung: 28.11.2018
(73) Patentinhaber: Erich Utsch AG, 57080 Siegen (DE)
(72) Erfinder: BRUCH, Harald, 57258 Freudenberg (DE); WÄSCHENBACH, Christoph, 57548 Kirchen (DE); WOLLENWEBER, Thomas, 57076 Siegen (DE); KÖLSCH, Jörg, 57234 Wilnsdorf (DE)
(74) Vertreter: Patentanwälte Bauer Vorberg Kayser
(86) Internationale Anmeldenummer: PCT/EP2016/075132
(87) Internationale Veröffentlichungsnummer: WO 2017/125173

(56) Entgegenhaltungen:
- DE-A1-102008 025 104
- DE-C1- 19 602 153

## Beschreibung

Die Erfindung betrifft eine Prägepresse zum Prägen von Kennzeichen-Platinen gemäß dem Oberbegriff des Anspruchs 1, sowie ein Verfahren zum Betreiben einer solchen Prägepresse.

Im Bereich der Herstellung von KFZ-Kennzeichenschildern sind Prägepressen bekannt, mit denen in einen Kennzeichen-Rohling eine bestimmte Kennzeichen-Legende in Form beispielsweise von Buchstaben und Zahlen eingeprägt und anschließend in einer weiteren Maschine eingefärbt wird. Die dabei verwendeten Kennzeichen-Rohlinge werden auch als Kennzeichen-Platinen bezeichnet und haben üblicherweise bereits das gewünschte Format und optional weitere Merkmale wie beispielsweise einen erhabenen umlaufenden Rand, landesspezifische Aufdrucke, Sicherheitsmerkmale, etc. Wird für ein Fahrzeug eine bestimmte Kennzeichen-Legende vergeben, wird diese individuell in eine Kennzeichen-Platine eingebracht.

In der Prägepresse wird die Legende dann erhaben in die Platine geprägt. Dazu wird eine Kennzeichen-Platine in die Prägepresse eingelegt. Die für die Prägung erforderlichen alphanumerischen Prägewerkzeuge in Form von sogenannten Klotzwerkzeugen oder Gegendruckwerkzeugen werden von einem Bediener manuell beispielsweise in eine Schublade gelegt und zusammen mit der Platine in die Prägepresse eingeschoben. Die Prägepresse kann dann den Prägevorgang für eine bestimmte Kennzeichen-Legende durchführen. Eine solche Prägepresse in Kombination mit einer Maschine zum anschließenden Einfärben der Legende ist beispielsweise aus der EP 1 207 082 B1 bekannt.

Derartige Prägepressen können insbesondere in KFZ-Zulassungsstellen zur Anwendung kommen, bei denen ein Bediener von einer Person einen Laufzettel der KFZ-Behörde erhält, auf dem die zu prägende Kennzeichen-Legende vermerkt ist. Ein solcher Prägeauftrag kann auch über das Internet oder sonstige andere Datenverbindungen an einen Bediener einer Prägepresse übermittelt werden. Beim Prägevorgang kann es jedoch zu manuellen Fehlern kommen, wenn der Bediener beispielsweise nicht die korrekten Klotzwerkzeuge einlegt oder eine falsche Platine verwendet. Ferner können Manipulationen stattfinden, wenn versucht wird, eine bestimmte, von der KFZ-Behörde vergebene Legende in mehrere Kennzeichen-Platinen eingebracht wird. Bekannt ist es daher auch, einer Prägepresse einen Prägeauftrag auf elektronischem Weg zu übermitteln, wodurch die für den erforderlichen Prägevorgang erforderlichen Informationen in der Prägepresse hinterlegt werden können. Beispielsweise können einem Bediener dann verschiedene Informationen auf einem Monitor angezeigt werden, um Fehler beim Prägen zu vermeiden. Jegliche Fehler und auch Manipulationen lassen sich so jedoch nicht vollständig verhindern.

Aus der DE 10 2008 025 104 A1 ist eine Prägepresse mit separatem, horizontal ausgerichteten Kameraaufbau bekannt, wobei der Kameraaufbau mit einer Antriebseinheit umfassend eine Kamera-Linearführung sowie einen Kamera-Antriebsmotor ausgestattet ist, um über Spiegeleinrichtungen Kennzeichen-Platinen unterschiedlichen Formats abfahren zu können.

Aufgabe der Erfindung ist es daher, eine Prägepresse und ein Verfahren zum Betreiben der Prägepresse bereitzustellen, mit der/dem die Handhabung von Kennzeichen-Platinen für den Prägevorgang einfacher und sicherer gestaltet werden kann, wobei insbesondere auch das Risiko von Manipulationen reduziert werden kann.

Erfindungsgemäß wird diese Aufgabe durch eine Prägepresse gemäß dem unabhängigen Anspruch 1 gelöst. Vorteilhafte Weiterbildungen der Prägepresse ergeben sich aus den Unteransprüchen 2-10. Ferner wird die Aufgabe durch ein Verfahren gemäß dem unabhängigen Anspruch 11 gelöst, wobei sich vorteilhafte Weiterbildungen dieses Verfahrens aus den Unteransprüchen 12-13 ergeben.

Die erfindungsgemäße Prägepresse zum Prägen von Kennzeichen-Platinen umfasst ein Gehäuse, in das eine Kennzeichen-Platine für einen Prägevorgang durch eine Gehäuseöffnung einbringbar ist. Dabei weist jede Kennzeichen-Platine wenigstens ein die jeweilige Kennzeichen-Platine eindeutig identifizierendes Identifikationsmerkmal auf, welches optisch erfassbar ist. Bei diesem Identifikationsmerkmal handelt es sich beispielsweise um einen eindimensionalen Barcode oder einen zweidimensionalen Data-Matrixcode.

Erfindungsgemäß weist die Prägepresse wenigstens eine Scanvorrichtung auf, die zur optischen Erfassung eines solchen Identifikationsmerkmals ausgebildet ist, wobei die Prägepresse einen Auslösemechanismus aufweist, der durch Bewegung einer Kennzeichen-Platine in Richtung der Gehäuseöffnung auslösbar ist. Durch diesen Auslösemechanismus ist die optische Erfassung des Identifikationsmerkmals durch die wenigstens eine Scanvorrichtung bewirkbar. Erfindungsgemäß ist die wenigstens eine Scanvorrichtung unterhalb der Gehäuseöffnung angeordnet und nach oben gerichtet und/oder die wenigstens eine Scanvorrichtung ist erfindungsgemäß oberhalb der Gehäuseöffnung angeordnet und nach unten gerichtet. Außerdem weist die Prägepresse erfindungsgemäß einen Timer auf, mit dem der Zeitraum seit der Erfassung eines Identifikationsmerkmals auf einer Kennzeichen-Platine erfassbar ist.

Eine solche Prägepresse hat den Vorteil, dass das Identifikationsmerkmal einer jeweiligen Kennzeichen-Platine automatisch erfassbar ist, wenn sie für einen Prägevorgang in die Prägepresse eingeschoben wird. Dies erleichtert die Arbeitsvorgänge für Nutzer der Prägepresse, da kein manueller Scanprozess erforderlich ist. Der Nutzer muss eine Kennzeichen-Platine lediglich in die Prägepresse einbringen, welche den Scanvorgang automatisch durchgeführt. Bewirkt wird die Erfassung durch einen Auslösemechanismus, der durch die Bewegung der Kennzeichen-Platine in Richtung der Gehäuseöffnung ausgelöst wird. Der Auslösemechanismus stellt also einen Trigger dar, der einen Scanvorgang erst auslöst, wenn sich die Kennzeichen-Platine in einer vorgegebenen Position auf ihrem Weg in die Prägepresse befindet. Dieser Triggerpunkt kann geeignet gewählt werden. Die Kennzeichen-Platine kann insbesondere auch auf einer Schublade durch die Gehäuseöffnung geschoben werden, wobei die Schublade mit dem Auslösemechanismus zusammenwirkt. Der Auslösemechanismus kann dabei jegliche Art von Sensor zur Positionserkennung umfassen. Beispielsweise kann er eine Lichtschranke, einen mechanischen Schalter, einen induktiven Sensor und/oder einen kapazitiven Sensor umfassen.

In einer Ausführungsform der Erfindung weist die wenigstens eine Scanvorrichtung eine Kamera aus. Mit einer solchen Kamera können insbesondere Identifikationsmerkmale wie Data-Matrixcodes anhand eines Bildes des Codes erfasst werden. Die Auslesung von Informationen aus dem Data-Matrixcode kann dann durch eine Software erfolgen, welcher das Bild des Codes übermittelt wird. Diese Software kann in einer Steuereinheit der Prägepresse vorliegen. Bei den aus dem Code ausgelesenen Informationen kann es sich beispielsweise um eine die Kennzeichen-Platine eindeutig identifizierende Seriennummer, Produktionsdaten, das Format der Platine, etc. handeln. Die Prägepresse weist daher vorzugsweise eine Recheneinheit mit einer solchen Software auf, um Informationen aus dem Code auszulesen. Dieses Auslesen kann jedoch auch von einer zentralen Verwaltungseinheit durchgeführt werden, an welche mehrere Prägepressen angeschlossen sind. Eine Prägepresse übermittelt dann das aufgenommene Bild eines Codes an die zentrale Verwaltungseinheit, welche die Informationen ausliest und gegebenenfalls der Prägepresse zurücksendet.

Dabei kann die Prägepresse eine oder mehrere Scanvorrichtungen aufweisen. Mehrere Scanvorrichtungen sind beispielsweise dann vorteilhaft, wenn in der Prägepresse unterschiedliche Typen von Kennzeichen-Platinen verwendet werden, welche Identifikationsmerkmale an verschiedenen Positionen aufweisen können. Beispielsweise kann ein Identifikationsmerkmal auf der Vorder- oder Rückseite einer Platine vorgesehen werden.

Insbesondere kann erfindungsgemäß wenigstens eine Scanvorrichtung unterhalb der Gehäuseöffnung angeordnet sein. Üblicherweise werden Kennzeichen-Platinen mit Ihrer Vorderseite nach oben in die Prägepresse eingebracht, so dass mit einer solchen unteren Scanvorrichtung ein Identifikationsmerkmal auf der Rückseite der Platine erfasst werden kann. Dabei kann diese unterseitige Scanvorrichtung vorteilhaft an verschiedenen Stellen positioniert werden. Beispielsweise kann sie sich innerhalb des Gehäuses unterhalb der Gehäuseöffnung befinden, so dass das Identifikationsmerkmal erst erfasst wird, wenn die Kennzeichen-Platine bereits so weit in die Prägepresse eingeschoben wurde, dass sich das Identifikationsmerkmal innerhalb des Gehäuses befindet.

In einer anderen Ausführungsform der Erfindung weist die Prägepresse unterhalb der Gehäuseöffnung einen nach vorne ragenden Vorbau auf, der eine Auflagefläche für die Kennzeichen-Platine bildet. Der Vorbau steht auf der Frontseite der Prägepresse von dem eigentlichen Grundgehäuse der Prägepresse ab, so dass eine Kennzeichen-Platine vor dem Einschieben in die Prägepresse auf diesem Vorbau abgelegt werden kann. Vorzugsweise ist die Auflagefläche als die bereits erwähnte Schublade ausgebildet, mit der eine Kennzeichen-Platine in die Prägepresse einschiebbar ist.

In dieser Ausführungsform der Erfindung kann die unterseitige Scanvorrichtung innerhalb dieses Vorbaus installiert sein, wodurch sie ein Identifikationsmerkmal auf der Unterseite der Platine erfassen kann, wenn sich diese auf dem Vorbau bzw. einer darauf befindlichen Schublade befindet. Die Oberseite des Vorbaus und eine darauf befindliche Schublade weisen dann wenigstens im Bereich des Identifikationsmerkmals eine Aussparung auf, durch welche das Identifikationsmerkmal von unten erfassbar ist.

Um in diesem unteren Bereich eine ausreichende Helligkeit für die Aufnahme eines Bildes z.B. eines Data-Matrixcodes zur Verfügung zu haben, weist die Scanvorrichtung vorzugsweise eine Beleuchtungseinheit auf. Hierbei kann es sich beispielsweise um eine Leuchtdiode (LED) handeln. Um störenden Reflexionen aufgrund der reflektierenden Rückseite einer Kennzeichen-Platine aus Aluminiumblech zu vermeiden, wird in einer Ausführungsform der Erfindung eine Beleuchtungseinheit mit wenigstens einer blauen LED verwendet. Ergänzt werden kann die Beleuchtungseinheit durch einen Polarisationsfilter vor der verwendeten Kamera. Hierdurch lassen sich störende Reflexionen unterdrücken und die Qualität des aufgenommenen Bildes für eine weitere Auslesung von Daten verbessern.

Um Identifikationsmerkmale auf der Oberseite von Kennzeichen-Platinen erfassen zu können, kann erfindungsgemäß wenigstens eine Scanvorrichtung oberhalb der Gehäuseöffnung angeordnet sein. Auch diese oberseitige Scanvorrichtung kann innerhalb oder außerhalb des Gehäuses der Prägepresse angeordnet sein. In einer Ausführungsform weist die Prägepresse oberhalb der Gehäuseöffnung eine Funktionseinheit auf, die von dem Gehäuse absteht, wobei die Scanvorrichtung an der Unterseite der Funktionseinheit angebracht ist. Bei dieser Funktionseinheit kann es sich beispielsweise um eine Bedien- und/oder Anzeigeeinheit handeln. Insbesondere umfasst die Funktionseinheit wenigstens einen Monitor, mit welchem dem Nutzer Informationen über die Vorgänge an der Prägepresse angezeigt werden können. Dieser Monitor kann auch als Touchscreen ausgebildet sein, über den die Prägepresse bedient werden kann. Eine Scanvorrichtung kann dann vorteilhaft in diese Funktionseinheit integriert sein, wobei die Scanvorrichtung nach unten gerichtet ist.

Da außerhalb des Gehäuses und damit oberhalb einer einzuschiebenden Kennzeichen-Platine Umgebungslichtbedingungen vorliegen, können diese je nach Standort der Prägepresse variieren. Um eine zuverlässige Erfassung des Identifikationsmerkmals bei unterschiedlichen Bedingungen zu gewährleichten, kann daher vorgesehen sein, dass die Scanvorrichtung eine Beleuchtungseinheit, insbesondere eine Beleuchtungseinheit mit IR-Beleuchtung aufweist.

Die erfindungsgemäße Prägepresse kann vorteilhaft für verschiedene Zwecke genutzt werden. Insbesondere kann sie dazu genutzt werden, Manipulationsversuche zu verhindern. Dies kann durch verschiedene Maßnahmen erreicht werden. Beispielsweise kann aus dem erfassten Identifikationsmerkmal eine Seriennummer der jeweiligen Kennzeichen-Platine ausgelesen und mit zulässigen Seriennummern verglichen werden, bevor ein Prägevorgang freigegeben wird. Ferner können mechanische Mittel vorhanden sein, die ein Herausbewegen der Kennzeichen-Platine aus der Prägepresse verhindern, sobald ihr Identifikationsmerkmal einmal erfasst wurde, der Prägevorgang jedoch noch nicht stattgefunden hat. Auf diese Weise kann verhindert werden, dass eine Kennzeichen-Platine lediglich bis zur Erfassung des Identifikationsmerkmals in die Prägepresse eingeschoben, anschließend jedoch wieder herausgezogen wird, um den Prägevorgang dann mit einer unzulässigen Kennzeichen-Platine durchführen.

Diese Sicherheitsfunktion kann auch durch eine Zeitsteuerung verwirklicht werden. Erfindungsgemäß weist die Prägepresse dazu einen Timer auf, mit dem der Zeitraum seit der Erfassung eines Identifikationsmerkmals auf einer Kennzeichen-Platine erfassbar ist. Dieser Timer kann in einer Sicherheitsfunktion so genutzt werden, dass ein Prägevorgang innerhalb eines vorgegebenen Zeitraums nach der Erfassung eines Identifikationsmerkmals erfolgen muss. Anderenfalls wird der Prägevorgang nicht freigegeben bzw. blockiert. Dieser Zeitraum wird entsprechend kurz gewählt, so dass einem Nutzer keine Zeit verbliebe, eine erfasste Kennzeichen-Platine wieder herauszuziehen und stattdessen eine unzulässige Kennzeichen-Platine einzuschieben.

Von der Erfindung umfasst ist auch ein Verfahren zum Betreiben einer Prägepresse zum Prägen von Kennzeichen-Platinen, bei dem eine Kennzeichen-Platine für einen Prägevorgang durch eine Gehäuseöffnung in ein Gehäuse der Prägepresse eingebracht wird. Auch hierbei weist die Kennzeichen-Platine wenigstens ein die jeweilige Kennzeichen-Platine eindeutig identifizierendes Identifikationsmerkmal auf, welches optisch erfassbar ist. Erfindungsgemäß wird das Identifikationsmerkmal einer Kennzeichen-Platine optisch von wenigstens einer Scanvorrichtung der Prägepresse erfasst, wenn die Kennzeichen-Platine in Richtung der Gehäuseöffnung bewegt wird, wobei ein Auslösemechanismus der Prägepresse ausgelöst wird, durch den die optische Erfassung des Identifikationsmerkmals durch die wenigstens eine Scanvorrichtung bewirkt wird. Erfindungsgemäß ist dabei die wenigstens eine Scanvorrichtung unterhalb der Gehäuseöffnung angeordnet und nach oben gerichtet und/oder die wenigstens eine Scanvorrichtung ist dabei erfindungsgemäß oberhalb der Gehäuseöffnung angeordnet und nach unten gerichtet. Außerdem erfasst erfindungsgemäß ein Timer der Prägepresse den Zeitraum seit der Erfassung eines Identifikationsmerkmals auf einer Kennzeichen-Platine und gibt keinen Prägevorgang frei, sofern der Zeitraum einen vorgegebenen Wert überschreitet.

Mit dem erfindungsgemäßen Verfahren lässt sich so eine automatische Erfassung von Identifikationsmerkmalen auf Kennzeichen-Platinen erreichen, was die Handhabung der Platinen erleichtert und beispielsweise für die zuvor genannten Sicherheitsfunktionen verwendet werden kann. Dabei wird das Verfahren vorzugsweise an einer Prägepresse durchgeführt, die nach einer oder mehreren der beschriebenen Ausführungsformen ausgebildet ist.

Erfindungsgemäß wird ein Timer der Prägepresse dazu verwendet, den Zeitraum seit der Erfassung eines Identifikationsmerkmals auf einer Kennzeichen-Platine zu erfassen. Das Verfahren sieht vor, keinen Prägevorgang freizugeben, sofern dieser Zeitraum einen vorgegebenen Wert überschreitet.

Ferner kann vorgesehen sein, dass die Erfassung des Identifikationsmerkmals einer Kennzeichen-Platine durch den Auslösemechanismus vorteilhaft möglichst spät erfolgt. Beispielsweise kann die Erfassung erst bewirkt werden, wenn sich die Kennzeichen-Platine bereits wenigstens teilweise innerhalb des Gehäuses der Prägepresse befindet. Dies erschwert Manipulationen, bei denen versucht wird, die Platine nach der Erfassung ihres Identifikationsmerkmals wieder herauszuziehen und stattdessen eine unzulässige Platine einzuschieben.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine Darstellung der Vorderseite eines Ausführungsbeispiels einer Kennzeichen-Platine;
- Fig. 2: eine Darstellung der Rückseite einer Kennzeichen-Platine gemäß Fig. 1 mit einem Identifikationsmerkmal;
- Fig. 3: einen schematischen Querschnitt durch eine Ausführungsform der erfindungsgemäßen Prägepresse; und
- Fig. 4: eine Prägepresse gemäß Fig. 3 beim Einschub einer Kennzeichen-Platine.

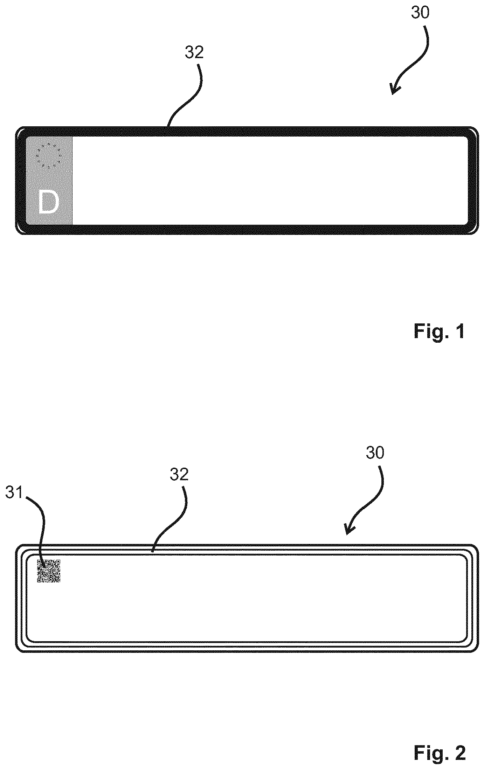

Die in Fig. 1 dargestellte Vorderseite einer Kennzeichen-Platine 30 zeigt beispielhaft eine mögliche Ausführungsform einer solchen Platine. Sie hat in diesem Ausführungsbeispiel eine langgestreckte, rechteckige Form. Es sind jedoch auch andere Formate mit anderen Seitenverhältnissen möglich. Die Platine 30 besteht aus einem Blechstreifen, wobei als Material beispielsweise eine Aluminiumlegierung gewählt werden kann. In diesen Blechstreifen ist bereits in umlaufender Rand 32 eingeprägt, der auf der Vorderseite erhaben ausgebildet und mit Farbe bedruckt ist. Im linken Bereich der Platine sind weitere Farbaufdrucke aufgebracht, die jedoch ebenfalls nur beispielhaft zu verstehen sind. Insgesamt kann die Kennzeichen-Platine landestypisch unterschiedliche Gestaltungen aufweisen.

Auf der in Fig. 2 dargestellten Rückseite der Kennzeichen-Platine 30 ist der eingeprägte Rand von hinten ersichtlich und das aufgedruckte Identifikationsmerkmal 31. Hierbei handelt es sich um einen zweidimensionalen Data-Matrixcode an sich bekannter Art. Dieser Matrixcode ist beispielsweise in einer Ecke der Platine aufgebracht und kann mit einer Scanvorrichtung erfasst werden, um die darin verschlüsselten Daten auszulesen.

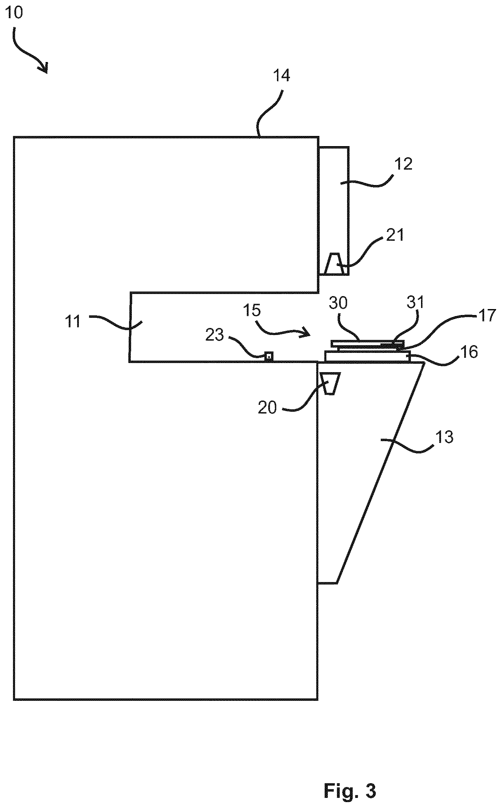

Der in Fig. 3 gezeigten schematischen Darstellung ist eine beispielhafte Ausführungsform einer Prägepresse 10 gemäß der Erfindung zu entnehmen, in der eine solche Kennzeichen-Platine 30 geprägt und dabei mit einer Legende versehen wird. Dabei handelt es sich vorzugsweise um ein relativ kompaktes Standgerät mit einem Gehäuse 14, in dem die wesentlichen Komponenten zum Prägen der Kennzeichen-Platinen untergebracht sind. Diese Komponenten sind nicht im Detail dargestellt, sind dem Fachmann jedoch bekannt und können ohne Weiteres je nach den gestellten Anforderungen vorgesehen werden. Insbesondere handelt es sich dabei um einen oder mehrere Pressstempel, mit denen Prägewerkzeuge in die Oberfläche einer Platine gepresst werden können.

Etwa auf Hüfthöhe eines Nutzers weist das Gehäuse 14 eine Gehäuseöffnung 15 auf, durch welche Kennzeichen-Platinen 30 in einen schematisch angedeuteten Prägeraum 11 innerhalb des Gehäuses 14 einbringbar sind. Innerhalb dieses Prägeraums 11 findet der Prägevorgang statt. Unterhalb der Gehäuseöffnung 15 ist ein nach außen vorspringender Vorbau 13 vorgesehen, der vor der Gehäuseöffnung 15 eine Auflagefläche bildet, auf der Kennzeichen-Platinen 30 abgelegt werden können. Insbesondere ist diese Auflagefläche als Schublade 16 ausgeführt, die horizontal verschiebbar ist. Eine Kennzeichen-Platine 30 kann zusammen mit den entsprechenden Prägewerkzeugen 17 auf der Schublade 16 vorbereitet und dann in die Gehäuseöffnung 15 eingeschoben werden. Beispielsweise können für einen Prägeauftrag mehrere Prägewerkzeuge 17 in die Schublade 16 eingelegt und die Kennzeichen-Platine 30 darüber gelegt werden. Nach dem Prägevorgang innerhalb des Prägeraums 11 wird das geprägte Kennzeichen auf der Schublade 16 aus der Prägepresse 10 gezogen und kann entnommen werden, um die erhaben geprägte Legende einzufärben.

Der kastenförmige Vorbau 13 kann beliebig ausgeformt sein und beispielsweise wie im Ausführungsbeispiel der Fig. 3 eine schräg verlaufende Frontwand aufweisen, um einem Bediener der Prägepresse genügend Fußraum zu bieten. Dabei kann eine Trennung zwischen dem Gehäuse 14 und dem Vorbau 13 bestehen, wobei der Vorbau 13 wie in Fig. 3 an der Außenseite des Gehäuses 14 angebracht ist. Die beiden Komponenten können jedoch auch einteilig ausgeformt sein, so dass das Gehäuse 14 im Bereich des Vorbaus 13 nach vorne hin erweitert ausgeführt ist.

Oberhalb der Gehäuseöffnung 15 ist eine Funktionseinheit 12 angebracht. Diese kann ebenfalls in das Gehäuse 14 integriert oder außen an dem Gehäuse 14 angebracht sein, wie es beispielsweise die Ausführungsform der Fig. 3 vorsieht. Diese Funktionseinheit 12 ist vorzugsweise als Bedien- und Anzeigeeinheit ausgebildet, wobei hierzu insbesondere eine Touchscreen verwendet werden kann. Über die Funktionseinheit 12 kann ein Bediener die Prägepresse 10 steuern, ihm können Informationen zu Prägeaufträgen angezeigt werden und auch Fehlermeldungen können auf diesem Monitor angezeigt werden.

Eine auf der Schublade 16 platzierte Kennzeichen-Platine 30 weist wenigstens ein Identifikationsmerkmal 31 auf, welches auf die Platine aufgebracht und optisch erfassbar ist. Bei der in Fig. 3 gezeigten Platine 30 befindet sich das Identifikationsmerkmal 31 auf der Unterseite der Platine. Es kann sich jedoch auch auf der Oberseite befinden, oder beide Seiten sind jeweils mit einem Identifikationsmerkmal versehen.

Um ein Identifikationsmerkmal auf der Oberseite einer Platine erfassen zu können, ist oberhalb der Gehäuseöffnung 15 eine erste Scanvorrichtung 21 angebracht. Diese kann beispielsweise an der Innenseite des Gehäuses 14 oberhalb der Gehäuseöffnung 15 vorgesehen werden, so dass ein Identifikationsmerkmal gelesen werden kann, sobald es die Gehäuseöffnung 15 passiert hat. In der Ausführungsform der Fig. 3 ist jedoch vorgesehen, dass die Scanvorrichtung 21 an der Unterseite der Funktionseinheit 12 angebracht ist. Die Scanvorrichtung 21 ist dabei nach unten auf die Schublade 16 gerichtet. Da es sich bei dem Identifikationsmerkmal vorzugsweise um einen zweidimensionalen Data-Matrixcode handelt, umfasst die Scanvorrichtung 21 eine Kamera zur Aufnahme eines Bildes der Platine mit dem Identifikationsmerkmal. Das so aufgenommene Bild des Identifikationsmerkmals kann von einer Software der Prägepresse oder einer zentralen Verwaltungseinheit in Verbindung mit der Prägepresse 10 analysiert werden, um Informationen aus dem Identifikationsmerkmal auszulesen.

Da die erste Scanvorrichtung 21 mit ihrer Kamera auch bei wechselnden Umgebungslichtbedingungen verlässlich arbeiten muss, kann die Scanvorrichtung 21 eine zusätzliche Beleuchtung umfassen, um tageslichtunabhängig zu sein. Hierzu ist insbesondere eine IR-Beleuchtung vorgesehen.

Um Identifikationsmerkmale auf der Unterseite von Kennzeichen-Platinen 30 erfassen zu können, kann eine zweite Scanvorrichtung 20 unterhalb der Gehäuseöffnung 15 vorgesehen werden, die nach oben gerichtet ist. Auch diese kann an der Innenseite des Gehäuses 14 unterhalb der Gehäuseöffnung 15 angebracht werden. Im Ausführungsbeispiel der Fig. 3 ist sie im Vorbau 13 unterhalb der Schublade 16 positioniert. Auch diese Scanvorrichtung 20 kann eine Kamera und eine zusätzliche Beleuchtung umfassen. Vorzugsweise umfasst die Beleuchtung wenigstens eine blaue LED und die Kamera einen Polarisationsfilter, um unerwünschte Reflexionen aufgrund der glänzenden Unterseite einer Kennzeichen-Platine 30 aus Blech zu unterdrücken.

Dabei sind die Oberseite des Vorbaus 13 bzw. die Schublade 16 so ausgeführt, dass das Licht der Beleuchtung auf das Identifikationsmerkmal 31 treffen und die Kamera ein Bild des Identifikationsmerkmals aufnehmen kann. Hierzu ist wenigstens im Bereich des Identifikationsmerkmals 31 eine Aussparung vorgesehen, durch welche das Identifikationsmerkmal 31 für die Kamera sichtbar ist.

Für den Fall, dass ein Identifikationsmerkmal so an einer Platine angebracht ist, dass es weder von der oberen Scanvorrichtung 21, noch von der unteren Scanvorrichtung 20 erfassbar ist, kann ergänzend ein Handscanner 22 vorgesehen werden, mit dem ein Bediener ein Identifikationsmerkmal auch manuell erfassen kann.

Um die automatisierte Erfassung eines Identifikationsmerkmals auszulösen, ist ein Auslösemechanismus vorgesehen, der von der Bewegung der Kennzeichen-Platine 30 selbst oder von der Schublade 16 ausgelöst werden kann. Beispielsweise kann hinter der Gehäuseöffnung 15 ein Auslösemechanismus 23 ausgebildet sein. Hierbei kann es sich beispielsweise um einen mechanischen Schalter oder eine Lichtschranke handeln. Im Ausführungsbeispiel der Fig. 3 ist beispielsweise eine Lichtschranke 23 auf Höhe der Schublade 16 angebracht. Sobald die Schublade 16 mit einer darauf befindlichen Kennzeichen-Platine 30 die Lichtschranke 23 passiert, löst der Auslösemechanismus die Erfassung der Identifikationsmerkmals 31 aus. Dabei können beide Scanvorrichtungen 20 und 21 aktiviert werden, wobei nur das Bild derjenigen Scanvorrichtung verwendet wird, auf der sich ein Identifikationsmerkmal befindet - also im Ausführungsbeispiel der Fig. 3 das Bild der unteren Scanvorrichtung 20. Es kann jedoch auch vorgesehen sein, dass die Prägepresse über Informationen verfügt, auf welcher Seite einer zu prägenden Kennzeichen-Platine 31 sich ein Identifikationsmerkmal befindet. Auf diese Weise kann die Prägepresse 10 entscheiden, welche Scanvorrichtung ausgelöst wird. Diese Information über die Position eines Identifikationsmerkmals kann beispielsweise in einem Prägeauftrag enthalten sein.

Werden nur Kennzeichen-Platinen mit Identifikationsmerkmalen auf einer festgelegten Seite der Platinen verwendet, d.h. nur auf der Vorder- oder Rückseite, kann die Erfindung auch mit einer einzigen Scanvorrichtung auf der entsprechenden Seite durchgeführt werden.

Der Auslösemechanismus 23 kann insbesondere so ausgestaltet sein, dass er erst auslöst, wenn die Kennzeichen-Platine 30 bereits teilweise in die Gehäuseöffnung 15 geschoben wurde. Ferner befindet sich der Auslösemechanismus 23 vorzugsweise innerhalb des Gehäuses 2, insbesondere an einer schwer zugänglichen Position, um möglichst auch Manipulationsversuche im Bereich des Auslösemechanismus zu verhindern.

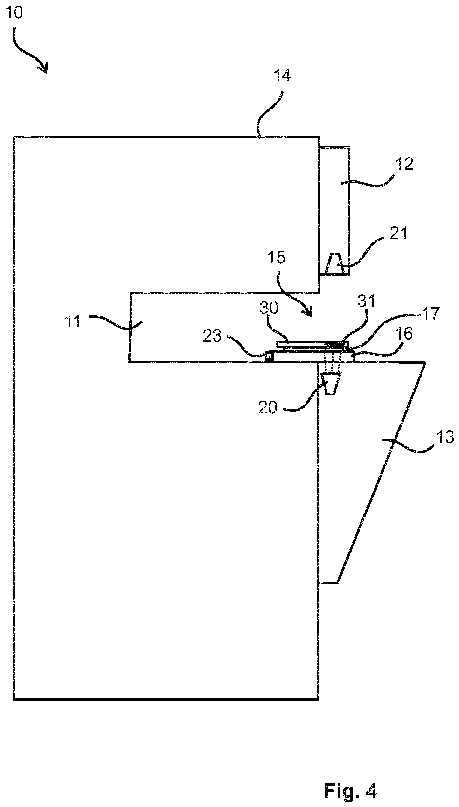

Fig. 4 zeigt den Zeitpunkt beim Einschieben der Schublade 16 in die Gehäuseöffnung 15, bei dem die vordere Seite der Schublade 16 in den Bereich des Auslösemechanismus 23 kommt. In dem Moment befindet sich das Identifikationsmerkmal 31 oberhalb der Scanvorrichtung 20, so dass diese ein Bild des Identifikationsmerkmals 31 aufnehmen kann.

Damit in der Prägepresse 10 verschiedene Formate von Kennzeichen-Platinen verwendet werden können, kann vorgesehen sein, dass der Auslösezeitpunkt für eine Scanvorrichtung vom Format der Platine abhängt. Informationen über das Format einer zu prägenden Platine können auch hierbei aus einem Prägeauftrag erhalten werden, welcher der Prägepresse 10 zuvor übermittelt wurde. Anhand dieser Information kann der Auslösezeitpunkt für eine Scanvorrichtung geeignet so gewählt werden, dass die Scanvorrichtung ein Bild eines Identifikationsmerkmals aufnehmen kann, wenn es sich im Bereich der jeweiligen Scanvorrichtung befindet.

Der Auslösemechanismus 23 kann auch einen Timer starten, welcher so einen Zeitraum nach der Erfassung eines Identifikationsmerkmals misst. Erfolgt innerhalb eines vorgegebenen Zeitraums kein Prägen der Platine wird, kann der Prägevorgang gesperrt und somit nicht mehr ausgeführt werden. Der Bediener muss eine Kennzeichen-Platine 30 somit weiter in den Prägeraum 11 schieben und der Prägevorgang muss innerhalb eines bestimmten Zeitrahmens stattfinden, um zulässig zu sein. Erfolgt dies nicht, deutet dies auf einen Manipulationsversuch hin, der durch Sperrung des Prägevorgangs verhindert werden kann.

### Bezugszeichenliste:

- 10: Prägepresse
- 11: Prägeraum
- 12: Funktionseinheit, Monitor
- 13: Vorbau
- 14: Gehäuse
- 15: Gehäuseöffnung
- 16: Schublade
- 17: Prägewerkzeug, Klotzwerkzeug
- 20,21: Scanvorrichtung, Kamera
- 22: Handscanner
- 23: Auslösemechanismus, Lichtschranke
- 30: Kennzeichen-Platine, Platine
- 31: Identifikationsmerkmal, Data-Matrixcode
- 32: Rand

## Patentansprüche

1. Prägepresse (10) zum Prägen von Kennzeichen-Platinen (30), umfassend ein Gehäuse (14), in das eine Kennzeichen-Platine (30) für einen Prägevorgang durch eine Gehäuseöffnung (15) einbringbar ist, wobei die Kennzeichen-Platine (30) wenigstens ein die jeweilige Kennzeichen-Platine (30) eindeutig identifizierendes Identifikationsmerkmal (31) aufweist, welches optisch erfassbar ist, wobei die Prägepresse (10) wenigstens eine Scanvorrichtung (20;21) aufweist, die zur optischen Erfassung eines Identifikationsmerkmals (31) ausgebildet ist, wobei die Prägepresse (10) einen Auslösemechanismus (23) aufweist, der durch Bewegung einer Kennzeichen-Platine (30) in Richtung der Gehäuseöffnung (15) auslösbar ist,
und dass durch diesen Auslösemechanismus (23) die optische Erfassung des Identifikationsmerkmals (31) durch die wenigstens eine Scanvorrichtung (20;21) bewirkbar ist, und **dadurch gekennzeichnet dass** die wenigstens eine Scanvorrichtung (20) unterhalb der Gehäuseöffnung (15) angeordnet und nach oben gerichtet ist und/oder die wenigstens eine Scanvorrichtung (21) oberhalb der Gehäuseöffnung (15) angeordnet und nach unten gerichtet ist, und dass die Prägepresse (10) einen Timer aufweist, mit dem der Zeitraum seit der Erfassung eines Identifikationsmerkmals (31) auf einer Kennzeichen-Platine (30) erfassbar ist.

2. Prägepresse nach Anspruch 1,
**dadurch gekennzeichnet, dass** der Auslösemechanismus (23) eine Lichtschranke, einen mechanischen Schalter, einen induktiven Sensor und/oder einen kapazitiven Sensor umfasst.

3. Prägepresse nach einem oder beiden der Ansprüche 1 und 2,
**dadurch gekennzeichnet, dass** die wenigstens eine Scanvorrichtung (20;21) eine Kamera aufweist.

4. Prägepresse nach einem oder mehreren der Ansprüche 1 bis 3,
**dadurch gekennzeichnet, dass** der Auslösemechanismus (23) mit einer Schublade (16) zusammenwirkt, auf der die Kennzeichen-Platine (30) durch die Gehäuseöffnung (15) schiebbar ist.

5. Prägepresse nach einem oder mehreren der Ansprüche 1 bis 4,
**dadurch gekennzeichnet, dass** die unterhalb der Gehäuseöffnung (15) angeordnete Scanvorrichtung (20) innerhalb eines Vorbaus (13) angeordnet ist, der eine Auflagefläche für die Kennzeichen-Platine (30) bildet.

6. Prägepresse nach einem oder mehreren der Ansprüche 1 bis 5,
**dadurch gekennzeichnet, dass** die unterhalb der Gehäuseöffnung (15) angeordnete Scanvorrichtung (20) eine Beleuchtungseinheit mit wenigstens einer blauen LED aufweist.

7. Prägepresse nach Anspruch 3,
**dadurch gekennzeichnet, dass** die Kamera der unterhalb der Gehäuseöffnung (15) angeordneten Scanvorrichtung (20) einen Polarisationsfilter aufweist.

8. Prägepresse nach einem oder mehreren der Ansprüche 1 bis 7,
**dadurch gekennzeichnet, dass** die Prägepresse (10) oberhalb der Gehäuseöffnung (15) eine Funktionseinheit (12) aufweist, die von dem Gehäuse (14) absteht, wobei die oberhalb der Gehäuseöffnung (15) angeordnete Scanvorrichtung (21) an der Unterseite der Funktionseinheit (12) angebracht ist.

9. Prägepresse nach Anspruch 8,
**dadurch gekennzeichnet, dass** die Funktionseinheit (12) wenigstens einen Monitor umfasst.

10. Prägepresse nach einem oder beiden der Ansprüche 8 und 9,
**dadurch gekennzeichnet, dass** die oberhalb der Gehäuseöffnung (15) angeordnete Scanvorrichtung (21) eine Beleuchtungseinheit mit IR-Beleuchtung aufweist.

11. Verfahren zum Betreiben einer Prägepresse (10) zum Prägen von Kennzeichen-Platinen (30), bei dem eine Kennzeichen-Platine (30) für einen Prägevorgang durch eine Gehäuseöffnung (15) in ein Gehäuse (14) der Prägepresse (10) eingebracht wird, wobei die Kennzeichen-Platine (30) wenigstens ein die jeweilige Kennzeichen-Platine (30) eindeutig identifizierendes Identifikationsmerkmal (31) aufweist, welches optisch erfassbar ist, wobei das Identifikationsmerkmal (31) einer Kennzeichen-Platine (30) optisch von wenigstens einer Scanvorrichtung (20;21) der Prägepresse (10) erfasst wird, wenn die Kennzeichen-Platine (30) in Richtung der Gehäuseöffnung (15) bewegt wird, wobei ein Auslösemechanismus (23) der Prägepresse (10) ausgelöst wird,
und dass durch den Auslösemechanismus (23) die optische Erfassung des Identifikationsmerkmals (31) durch die wenigstens eine Scanvorrichtung (20;21) bewirkt wird, und **dadurch gekennzeichnet dass** die wenigstens eine Scanvorrichtung (20) unterhalb der Gehäuseöffnung (15) angeordnet und nach oben gerichtet ist und/oder die wenigstens eine Scanvorrichtung (21) oberhalb der Gehäuseöffnung (15) angeordnet und nach unten gerichtet ist, und dass ein Timer der Prägepresse (10) den Zeitraum seit der Erfassung eines Identifikationsmerkmals (31) auf einer Kennzeichen-Platine (30) erfasst und keinen Prägevorgang freigibt, sofern der Zeitraum einen vorgegebenen Wert überschreitet.

12. Verfahren nach Anspruch 11,
**dadurch gekennzeichnet, dass** das Verfahren an einer Prägepresse gemäß einem oder mehreren der Ansprüche 1 bis 10 durchgeführt wird.

13. Verfahren nach einem oder mehreren der Ansprüche 11 bis 12,
**dadurch gekennzeichnet, dass** die Erfassung des Identifikationsmerkmals (31) einer Kennzeichen-Platine (30) durch den Auslösemechanismus (23) bewirkt wird, wenn sich die Kennzeichen-Platine (30) bereits wenigstens teilweise innerhalb des Gehäuses (14) der Prägepresse (10) befindet.

## Claims

1. An embossing press (10) for embossing number plate panels (30), comprising a housing (14) into which a number plate panel (30) can be introduced through a housing opening (15) for an embossing process, wherein the number plate panel (30) has at least one optically detectable identification feature (31) uniquely identifying the respective number plate panel (30), wherein the embossing press (10) comprises at least one scanning device (20; 21) configured for optically detecting an identification feature (31), wherein the embossing press (10) has a trigger mechanism (23) that can be triggered by a movement of a number plate panel (30) in the direction of the housing opening (15),
and that the optical detection of the identification feature (31) by means of the at least one scanning device (20; 21) can be caused by this trigger mechanism (23), and **characterized in that** the at least one scanning device (20) is disposed underneath the housing opening (15) and pointed upwards and/or the at least one scanning device (21) is disposed above the housing opening (15) and pointed downwards, and that the embossing press (10) has a timer with which the period from the detection of an identification feature (31) on a number plate panel (30) can be detected.

2. The embossing press according to claim 1,
**characterized in that** the trigger mechanism (23) includes a light barrier, a mechanical switch, an inductive sensor and/or a capacitive sensor.

3. The embossing press according to any one or both of the claims 1 and 2,
**characterized in that** the at least one scanning device (20; 21) includes a camera.

4. The embossing press according to any one or several of the claims 1 to 3, **characterized in that** the trigger mechanism (23) cooperates with a drawer (16) on which the number plate panel (30) can be pushed through the housing opening (15).

5. The embossing press according to any one or several of the claims 1 to 4,
**characterized in that** the scanning device (20) disposed underneath the housing opening (15) is disposed within a front section (13) that forms a support surface for the number plate panel (30).

6. The embossing press according to any one or several of the claims 1 to 5,
**characterized in that** the scanning device (20) disposed underneath the housing opening (15) has a lighting unit with at least one blue LED.

7. The embossing press according to claim 3,
**characterized in that** the camera of the scanning device (20) disposed underneath the housing opening (15) has a polarizing filter.

8. The embossing press according to any one or several of the claims 1 to 7,
**characterized in that** the embossing press (10) includes a functional unit (12) above the housing opening (15), which protrudes from the housing (14), wherein the scanning device (21) disposed above the housing opening (15) is attached to the underside of the functional unit (12).

9. The embossing press according to claim 8,
**characterized in that** the functional unit (12) includes at least one monitor.

10. The embossing press according to any one or both of the claims 8 and 9,
**characterized in that** the scanning device (21) disposed above the housing opening (15) has a lighting unit with IR lighting.

11. A method for operating an embossing press (10) for embossing number plate panels (30), in which a number plate panel (30) is introduced through a housing opening (15) into a housing (14) of the embossing press (10) for an embossing process, wherein the number plate panel (30) has at least one optically detectable identification feature (31) uniquely identifying the respective number plate panel (30), wherein the identification feature (31) of a number plate panel (30) is optically detected by at least one scanning device (20; 21) of the embossing press (10) when the number plate panel (30) is moved towards the housing opening (15), wherein a trigger mechanism (23) of the embossing press (10) is triggered,
and that the optical detection of the identification feature (31) by means of the at least one scanning device (20; 21) is caused by the trigger mechanism (23), and **characterized in that** the at least one scanning device (20) is disposed underneath the housing opening (15) and pointed upwards and/or the at least one scanning device (21) is disposed above the housing opening (15) and pointed downwards, and that a timer of the embossing press (10) detects the period from the detection of an identification feature (31) on a number plate panel (30) and does not enable a embossing process if the period exceeds a predetermined value.

12. The method according to claim 11,
**characterized in that** the method is carried out on an embossing press according to one or several of the claims 1 to 10.

13. The method according to any one or several of the claims 11 to 12,
**characterized in that** the detection of the identification feature (31) of a number plate panel (30) is caused by the trigger mechanism (23) when the number plate panel (30) is already located at least partially within the housing (14) of the embossing press (10).

## Revendications

1. Presse à estamper (10) destinée à estamper des plaques d'immatriculation (30), comprenant un boîtier (14) dans lequel une plaque d'immatriculation (30) peut être introduite à travers une ouverture de boîtier (15) pour une opération d'estampage, dans laquelle la plaque d'immatriculation (30) comprend au moins une caractéristique d'identification (31) qui identifie de manière unique la plaque d'immatriculation (30) respective et qui peut être détectée optiquement, dans laquelle la presse à estamper (10) comprend au moins un dispositif de balayage (20; 21) qui est conçu pour la détection optique d'une caractéristique d'identification (31), la presse à estamper (10) présentant un mécanisme de déclenchement (23) qui peut être déclenché en déplaçant une plaque d'immatriculation (30) en direction de l'ouverture de boîtier (15), et
dans laquelle la détection optique de la caractéristique d'identification (31) par ledit au moins un dispositif de balayage (20; 21) peut être provoquée par ce mécanisme de déclenchement (23),
et **caractérisée par le fait que** ledit au moins un dispositif de balayage (20) est disposé au-dessous de l'ouverture de boîtier (15) et est dirigé vers le haut et/ou que ledit au moins un dispositif de balayage (21) est disposé au-dessus de l'ouverture de boîtier (15) et est dirigé vers le bas, et que la presse à estamper (10) comprend une minuterie qui permet d'enregistrer la période de temps qui s'est écoulée depuis la détection d'une caractéristique d'identification (31) sur une plaque d'immatriculation (30).

2. Presse à estamper selon la revendication 1, **caractérisée par le fait que** le mécanisme de déclenchement (23) comprend un barrage photoélectrique, un interrupteur mécanique, un capteur inductif et/ou un capteur capacitif.

3. Presse à estamper selon l'une ou les deux des revendications 1 et 2, **caractérisée par le fait que** ledit au moins un dispositif de balayage (20; 21) comprend une caméra.

4. Presse à estamper selon l'une ou plusieurs des revendications 1 à 3, **caractérisée par le fait que** le mécanisme de déclenchement (23) coopère avec un tiroir (16) sur lequel la plaque d'immatriculation (30) peut être poussée à travers l'ouverture de boîtier (15).

5. Presse à estamper selon l'une ou plusieurs des revendications 1 à 4, **caractérisée par le fait que** le dispositif de balayage (20) qui est disposé au-dessous de l'ouverture de boîtier (15) est agencé à l'intérieur d'une saille (13) qui forme une surface d'appui pour la plaque d'immatriculation (30).

6. Presse à estamper selon l'une ou plusieurs des revendications 1 à 5, **caractérisée par le fait que** le dispositif de balayage (20) qui est disposé au-dessous de l'ouverture de boîtier (15) comprend une unité d'éclairage comprenant au moins une DEL bleue.

7. Presse à estamper selon la revendication 3, **caractérisée par le fait que** la caméra du dispositif de balayage (20) qui est disposé au-dessous de l'ouverture de boîtier (15) comprend un filtre de polarisation.

8. Presse à estamper selon l'une ou plusieurs des revendications 1 à 7, **caractérisée par le fait que** la presse à estamper (10) au-dessus de l'ouverture de boîtier (15) comprend une unité fonctionnelle (12) qui fait saillie du boîtier (14), dans laquelle le dispositif de balayage (21) disposé au-dessus de l'ouverture de boîtier (15) est monté sur la face inférieure de l'unité fonctionnelle (12).

9. Presse à estamper selon la revendication 8, **caractérisée par le fait que** l'unité fonctionnelle (12) comprend au moins un moniteur.

10. Presse à estamper selon l'une ou les deux des revendications 8 et 9, **caractérisée par le fait que** le dispositif de balayage (21) qui est disposé au-dessus de l'ouverture de boîtier (15) comprend une unité d'éclairage à éclairage IR.

11. Procédé destiné à faire fonctionner une presse à estamper (10) destinée à estamper des plaques d'immatriculation (30), dans lequel une plaque d'immatriculation (30) est introduite à travers une ouverture de boîtier (15) dans un boîtier (14) de la presse à estamper (10) pour une opération d'estampage, dans lequel la plaque d'immatriculation (30) comprend au moins une caractéristique d'identification (31) qui identifie de manière unique la plaque d'immatriculation (30) respective et qui peut être détectée optiquement, dans lequel la caractéristique d'identification (31) d'une plaque d'immatriculation (30) est détectée de manière optique par au moins un dispositif de balayage (20; 21) de la presse à estamper (10) lorsque la plaque d'immatriculation (30) est déplacée en direction de l'ouverture de boîtier (15), dans lequel un mécanisme de déclenchement (23) de la presse à estamper (10) est déclenché,
et dans lequel le mécanisme de déclenchement (23) provoque la détection optique de la caractéristique d'identification (31) par ledit au moins un dispositif de balayage (20; 21), et **caractérisé par le fait que** ledit au moins un dispositif de balayage (20) est disposé au-dessous de l'ouverture de boîtier (15) et est dirigée vers le haut et/ou ledit au moins un dispositif de balayage (21) est disposé au-dessus de l'ouverture de boîtier (15) et est dirigé vers le bas, et qu'une minuterie de la presse à estamper (10) enregistre la période de temps qui s'est écoulée depuis la détection d'une caractéristique d'identification (31) sur une plaque d'immatriculation (30) et n'autorise pas une opération d'estampage si la période de tempes dépasse une valeur spécifiée.

12. Procédé selon la revendication 11, **caractérisé par le fait que** le procédé est mis en oeuvre sur une presse à estamper selon une ou plusieurs des revendications 1 à 10.

13. Procédé selon une ou plusieurs des revendications 11 à 12, **caractérisé par le fait que** la détection de la caractéristique d'identification (31) d'une plaque d'immatriculation (30) est provoquée par le mécanisme de déclenchement (23) lorsque la plaque d'immatriculation (30) se trouve déjà au moins en partie à l'intérieur du boîtier (14) de la presse à estamper (10).
